# EUROPÄISCHE PATENTSCHRIFT

(11) **EP 3 201 281 B1**
(45) Veröffentlichungstag und Bekanntmachung des Hinweises auf die Patenterteilung: **09.01.2019**
(21) Anmeldenummer: 15757217.3
(22) Anmeldetag: 27.08.2015
(51) Int. Cl.: C09G 1/04, C09K 13/04, C23F 1/16, C23G 1/02, C23F 3/06

(54) **VERFAHREN ZUM NASSCHEMISCHEN POLIEREN VON FORMTEILEN AUS ZINK**
METHOD FOR THE WET CHEMICAL POLISHING AND DEBURRING OF MOULDED PARTS MADE OF ZINC
PROCÉDÉ DE POLISSAGE ET D'ÉBAVURAGE PAR CHIMIE HUMIDE DE PIÈCES DE FORMAGE EN ZINC

(30) Priorität: 02.10.2014 EP 14003409
(43) Veröffentlichungstag der Anmeldung: 09.08.2017
(73) Patentinhaber: Poligrat GmbH, 81829 München (DE)
(72) Erfinder: PIESSLINGER-SCHWEIGER, Siegfried, 85591 Vaterstetten (DE); BOEHME, Olaf, 85435 Erding (DE); REISING, Bastian, 63755 Alzenau-Wasserlos (DE)
(74) Vertreter: Wibbelmann, Jobst
(86) Internationale Anmeldenummer: PCT/EP2015/069595
(87) Internationale Veröffentlichungsnummer: WO 2016/050427

(56) Entgegenhaltungen:
- DD-A1- 201 465
- GB-A- 619 336
- DATABASE WPI Week 201014 Thomson Scientific, London, GB; AN 2010-B56256 XP002747555, -& CN 101 634 028 A (CHINESE ACAD SCI NINGBO INST MATERIAL TE) 27. Januar 2010 (2010-01-27)
- DATABASE WPI Week 201017 Thomson Scientific, London, GB; AN 2010-B56455 XP002747556, -& CN 101 634 019 A (CHINESE ACAD SCI NINGBO INST MATERIAL TE) 27. Januar 2010 (2010-01-27)
- DATABASE WPI Week 197447 Thomson Scientific, London, GB; AN 1974-81640V XP002735796, & JP S49 53533 A (NIPPON SODA CO) 24. Mai 1974 (1974-05-24)
- DATABASE WPI Week 197935 Thomson Scientific, London, GB; AN 1979-64426B XP002747557, & SU 633 889 A (AS UKR GEN INORG CH) 26. November 1978 (1978-11-26)
- DATABASE WPI Week 197523 Thomson Scientific, London, GB; AN 1975-38233W XP002735799, & JP S49 98730 A (NIPPON PEROXIDE CO LTD) 18. September 1974 (1974-09-18)

## Beschreibung

Die vorliegende Erfindung betrifft ein Verfahren zum nasschemischen Polieren von Formteilen aus Zink. Bei dem erfindungsgemäßen Verfahren kommt es besonders darauf an, ohne Chromsäure oder Chromate, ohne Salpetersäure oder Nitrate, ohne Flusssäure oder Fluoride, und ohne Salzsäure oder Chloride zu arbeiten.

Zink wird speziell in Form von Zinkdruckguss in großem Umfang zur Herstellung von unterschiedlichsten, oftmals komplex geformten Teilen eingesetzt. Nach dem Gießen müssen die Teile vielfach mechanisch bearbeitet werden durch Bohren, Gewindeschneiden, Schleifen, Drehen und Fräsen. Dabei wird die Oberfläche aufgeraut und es entstehen störende Grate. Die Glättung der Oberfläche und die Entfernung der Grate werden in der Regel durch Schleifen, Gleitschleifen und Polieren vorgenommen. Dies stellt oft einen hohen Aufwand dar und liefert nicht das gewünschte Ergebnis, speziell wenn die zu bearbeitenden Oberflächen für mechanische Verfahren schlecht oder nicht zugänglich sind.

Teile aus Zinkdruckguss werden vielfach aus dekorativen Gründen und zum Korrosionsschutz an ihren Oberflächen beschichtet. Dieses geschieht meist durch Galvanisieren oder Lackieren. Für beide Verfahren müssen die Oberflächen im Ausgangszustand sauber, frei von Graten und Schuppen und möglichst glatt sein.

Ähnliche Aufgabenstellungen werden bei anderen Metallen und Legierungen vielfach durch chemisches oder elektrochemisches Polieren und Entgraten gelöst. Diese nass-chemischen Verfahren erreichen die gesamte Oberfläche der Teile und erzeugen glatte und metallisch reine Oberflächen. Sie sind im Gegensatz zu mechanischen Verfahren einfach und wirtschaftlich in Galvanoanlagen oder Lackieranlagen zu integrieren.

Für Zinkdruckguss stehen weder chemische noch elektrochemische Verfahren zur Verfügung, die sich für den industriellen Einsatz eignen. In der Vergangenheit wurden sporadisch Verfahren zum chemischen oder elektrolytischen Polieren eingesetzt, welche aber hohe Konzentrationen von Chromsäure (50 bis 250 g/l) aufwiesen und letztlich unbefriedigende Ergebnisse hinsichtlich der Oberflächenqualität lieferten. Deshalb werden diese Verfahren heute nicht mehr eingesetzt. Chromsäure ist darüber hinaus extrem giftig, krebserregend und erbgutschädigend, weshalb zu erwarten ist, dass deren Verwendung in nächster Zeit im Rahmen der Europäischen Chemikalienverordnung (REACH) verboten wird.

Es besteht somit nach wie vor ein hoher Bedarf an geeigneten Verfahren zum chemischen oder elektrochemischen Polieren und Entgraten von Teilen aus Zinkdruckguss.

Die Erfindung:
Die vorliegende Erfindung betrifft ein Verfahren zum chemischen Entgraten und Polieren von Zink, welches ohne Chromsäure bzw. ohne Fluoride durchgeführt werden kann. Diese Erfindung geht auf die Erkenntnis zurück, dass sich glatte, porenfreie Zinkoberflächen in einem nass-chemischen Verfahren erhalten lassen, wenn man die Zinkoberfläche mit einer sauren Lösung in Kontakt bringt, die zumindest Schwefelsäure und Phosphorsäure enthält.

Gegenstand der Erfindung ist somit ein Verfahren zum nass-chemischen Polieren von Formteilen aus Zink, wobei das Formteil oder die Formteile mit einer sauren Lösung in Kontakt gebracht wird/werden, die saure Lösung als starke Säuren nur Schwefelsäure und Phosphorsäure enthält und die Gesamtsäurekonzentration dieser starken Säuren in einem Bereich von 40 bis 90 Gew.-% liegt. Das erfindungsgemäße Verfahren liefert in relativ kurzer Zeit (10 Minuten und weniger) Zinkoberflächen mit deutlicher Senkung der Rauigkeit; d.h., der Mittenrauwert Rₐ kann von einem Ausgangswert von 2,5 µm auf 1,4 µm abgesenkt werden. Das erfindungsgemäße Verfahren wird also beispielsweise so lange ausgeführt, bis der Mittenrauwert Rₐ mindestens um 30 % ausgehend von ursprünglichem Rₐ-Wert verringert wurde.

Bei dem erfindungsgemäßen Verfahren werden die Formteile in vorteilhafter Weise zugleich entgratet.

Die durch das Verfahren angesprochenen Formteile aus Zink sind regelmäßig solche Teile, wie sie beim Zinkdruckguss erhalten werden. Es sind aber auch andere Verfahren zur Herstellung von Formteilen aus Zink im Stand der Technik bekannt. Zink kann darüber hinaus mit Magnesium und/oder Aluminium zusammen in einer Legierung vorliegen (der Kupfergehalt ist dann maximal 0,5 %). Die vorliegende Erfindung betrifft aber nicht solche metallischen Formteile, die eher als Kupferlegierungen mit Zink (z.B. Messing) aufzufassen sind. Solche Legierungen verhalten sich chemisch völlig anders als Zinklegierugen im Sinne der vorliegenden Erfindung. Solche Kupferlegierungen mit Zink unterscheiden sich von dem reinen Zinkmetall (das gegebenenfalls kleinere Mengen anderer Metalle enthalten kann) unter anderem dadurch in ihrem chemischen Verhalten, dass durch die Zulegierung eines anderen Metalls (im vorliegenden Fall wäre das Kupfer) unter anderem die Korrosionsbeständigkeit stark beeinflusst wird. Deshalb reagiert eine solche Kupferlegierung auch vollständig anders auf einen Kontakt mit einer starken Säure als ein Formteil aus Zink.

Selbstverständlich konnte ein Fachmann erwarten, dass eine starke Säure auch eine Zinkoberfläche anlöst. Für einen Fachmann muss es aber als überraschend gelten, wenn durch das nasschemische Verfahren neben dem Materialabtrag auch eine Polierwirkung erzielt werden kann.

Nasschemisches Polieren bedeutet im vorliegenden Fall, dass im Wesentlichen mit einer Lösung der Säuren in Wasser gearbeitet wird. Üblicherweise werden deshalb keinerlei Verdickungsmittel und dergleichen zugegeben.

Bei dem erfindungsgemäßen nasschemischen Polieren kommt es vorteilhaft zu einem Entgraten des Formteils, d.h., dass von der Zinkoberfläche ähnlich wie beim Schleifen gegebenenfalls vorhandene Grate entfernt werden. Üblicherweise wird das erfindungsgemäße Verfahren über einen so langen Zeitraum durchgeführt, bis die gewünschte glatte, porenfreie Oberfläche erhalten wird. Diese Zeit beträgt üblicherweise 5 bis 20 Minuten. Während dieses Zeitraums kann ein Formteil aus Zink lediglich in einem Bad mit der erfindungsgemäßen sauren Lösung eingebracht sein. Die Verfahrensdauer kann aber auch durch Bewegen des Formteils in der sauren Lösung verkürzt werden.

Das erfindungsgemäße nass-chemische Verfahren wird im Normalfall als chemisches Verfahren zum Polieren von Formteilen aus Zink durchgeführt werden. Es ist prinzipiell aber auch möglich, dieses Verfahren als ein elektrochemisches Verfahren durchzuführen, wobei dann das Zinkformteil selber als Elektrode in diesem Verfahren eingesetzt wird.

Ein wesentliches Merkmal des erfindungsgemäßen Verfahrens ist es, dass die verfahrensgemäß eingesetzte Lösung zumindest Schwefelsäure und Phosphorsäure enthält. Unter Schwefelsäure versteht man im vorliegenden Fall eine etwa 96%ige Schwefelsäurelösung und unter Phosphorsäure eine etwa 85%ige Phosphorsäurelösung.

Im vorliegenden Verfahren liegt die Gesamtsäurekonzentration in einem Bereich von 40 bis 90 Gew.-%. Das Verhältnis Phosphorsäure zu Schwefelsäure liegt üblicherweise in einem Bereich von 30% : 70% bis 70% : 30%, vorzugsweise 50% : 50% (Gew.-%).

Im erfindungsgemäßen Verfahren wird zusätzlich ein Oxidationsmittel eingesetzt. Übliche Oxidationsmittel sind Persulfate, Perchlorate, sowie Peroxide. Dem Oxidationsmittel (insbesondere den Peroxiden) kann noch ein Stabilisator beigegeben sein (siehe EP 1 903 081 A2). Bevorzugte Oxidationsmittel sind Kaliumpersulfat, Kaliumperchlorat und Wasserstoffperoxid. Bei den Persulfaten und Perchloraten liegt die Konzentration üblicherweise in einem Bereich von 1% bis 10%, bevorzugt 2% bis 5% (Gew.-%). Bei Wasserstoffperoxid (30%ig) liegt die Konzentration üblicherweise in einem Bereich von 4% bis 20%, vorzugsweise 10% (Gew.-%).
Weiterhin kann die erfindungsgemäße saure Lösung eine oberflächenaktive Substanz aufweisen. Diese oberflächenaktive Substanz sollte regelmäßig säurebeständig sein, beispielweise Netzmittel aus der Produktreihe Lutensol der Firma BASF; insbesondere Lutensol FA 12. Diese Netzmittel/oberflächenaktiven Substanzen können mit einer Konzentration (Gew.-%) von 0,2% bis 2,5%, bevorzugt 0,8% bis 1,0%, eingesetzt werden.
Im Normalfall enthält eine erfindungsgemäße saure Lösung zusätzlich nur noch Wasser. Es können aber auch andere polare Lösemittel vorliegen.
Das erfindungsgemäße Verfahren wird üblicherweise mit einer Kontaktzeit zwischen der sauren Lösung und dem Formteil bis zu 20 Minuten durchgeführt. Die Verfahrensdauer kann aber auch durch andere Faktoren, wie Bewegung, Ultraschall und Temperaturgradiente beeinflusst werden.
Die Arbeitstemperatur des Verfahrens liegt üblicherweise in einem Bereich von 15°C bis 60°C. Vorzugsweise wird das Verfahren bei einer Temperatur in einem Bereich von 30 C bis 40°C durchgeführt.
Ein besonderer Vorteil des vorliegenden Verfahrens liegt darin, dass die saure Lösung keine Chromsäure oder Chromate, keine Salpetersäure oder Nitrate, keine Flusssäure oder Fluoride und keine Salzsäure oder Chloride enthält. Dieses Verfahren ist folglich ganz besonders für großtechnische Anlagen geeignet, da die anfallenden Abwässer deutlich umweltverträglicher sind. Darüber hinaus lassen sich diese Abwässer problemlos wieder so aufbereiten, dass sie erneut in dem erfindungsgemäßen Verfahren zum Einsatz kommen können.
Sämtliche Konzentrationsangaben in dieser Anmeldung sind in Gew.-% ausgedrückt.

### Beispiel 1:

Scharnierteil aus Zinkdruckguss mit gefräster Nut und Querbohrung Teilegröße ca. 30 x 20 x 8 mm
Aufgabenstellung: Grate an der Querbohrung in der Nut entfernen und Oberfläche glätten für nachfolgende galvanische Beschichtung.
Badansatz:
   25% Schwefelsäure
   25% Phosphorsäure
   5% Kaliumpersulfat
   0,6% Lutensol FA 12
   Rest: Wasser

Die Teile wurden als Vorbehandlung in einer alkalischen Abkochentfettung 10 Minuten entfettet, dann mit Wasser gespült, für 10 Minuten in der erfindungsgemäßen Lösung bei 35°C behandelt, dann mit Wasser gespült und getrocknet. Die so behandelten Teile waren gratfrei und wiesen eine hellgrau glänzende glatte und für eine galvanische Beschichtung geeignete Oberfläche auf.

### Beispiel 2:

Betätigungstasten aus Zinkdruckguss für Armaturen mit Bohrungen und Fräskanten sollten entgratet und an den Oberflächen geglättet werden zur nachfolgenden galvanischen Verchromung.
Badansatz:
20% Schwefelsäure
30% Phosphorsäure
10% Wasserstoffperoxid
0,8% Lutensol FA 12
Rest Wasser

Die Teile wurden gemäß Beispiel 1 vorbehandelt, dann 15 Minuten bei 30°C in dem Badansatz behandelt, mit Wasser gespült und getrocknet.

Die so behandelten Teile waren grat- und porenfrei und wiesen eine glatte, hellgrau glänzende Oberfläche auf mit glatten und leicht verrundeten Kanten. Die Teile zeigten nach dem Verchromen eine einwandfreie Oberflächenqualität auf.

## Patentansprüche

1. Verfahren zum nass-chemischen Polieren von Formteilen aus Zink, wobei das Formteil oder die Formteile mit einer sauren Lösung in Kontakt gebracht wird/werden, die saure Lösung als starke Säuren nur Schwefelsäure und Phosphorsäure enthält, und die Gesamtsäurekonzentration der starken Säuren in einem Bereich von 40 bis 90 Gew.-% liegt, wobei die saure Lösung keine Chromsäure/Chromate, keine Salpetersäure/Nitrate, keine Flusssäure/Fluoride und keine Salzsäure/Chloride enthält, und wobei die saure Lösung zusätzlich ein Oxidationsmittel enthält.

2. Verfahren nach Anspruch 1,
wobei das Formteil oder die Formteile solange mit der sauren Lösung behandelt wird/werden, bis der Mittenrauwert Rₐ um mindestens 30 % ausgehend vom ursprünglichen Ra-Wert verringert wurde.

3. Verfahren nach Anspruch 1 oder 2,
wobei das Verhältnis (Gew.-%) Phosphorsäure zu Schwefelsäure in der sauren Lösung in einem Bereich von 30% : 70% bis 70% : 30% liegt.

4. Verfahren nach Anspruch 1,
wobei das Oxidationsmittel ausgewählt wird aus der Gruppe bestehend aus Persulfaten, Perchloraten und Peroxiden.

5. Verfahren nach Anspruch 1 oder 4,
wobei das Oxidationsmittel in einer Konzentration von 1% bis 20 Gew.-% vorliegt.

6. Verfahren nach einem der vorstehenden Ansprüche,
wobei die Lösung zusätzlich oberflächenaktive Substanzen aufweist.

7. Verfahren nach einem der vorstehenden Ansprüche,
bei dem die Kontaktzeit zwischen der sauren Lösung und dem Formteil bis 20 Minuten ausmacht.

8. Verfahren nach einem der vorstehenden Ansprüche,
wobei das Verfahren bei einer Temperatur in einem Bereich von 15°C bis 60°C durchgeführt wird.

9. Verfahren nach Anspruch 8,
wobei die Temperatur in einem Bereich von 30°C bis 40°C liegt.

## Claims

1. A method for the wet chemical polishing of molded parts made of zinc, wherein the molded part or the molded parts is/are brought in contact with an acid solution, wherein the acid solution contains only sulfuric acid and phosphoric acid as strong acids, and the total acid concentration of the strong acids is in a range of 40 to 90% by weight, wherein the acid solution contains no chromic acid/chromates, no nitric acid/nitrates, no hydrofluoric acid/fluorides, and no hydrochloric acid/chlorides, and wherein the acid solution additionally contains an oxidizing agent.

2. The method according to claim 1,
wherein the molded part or the molded parts is/are treated with the acid solution until the average roughness value Rₐ has been reduced at least by 30%, based on the original Rₐ value.

3. The method according to claim 1 or 2,
wherein the ratio (% by weight) of phosphoric acid to sulfuric acid in the acid solution is in a range of 30% : 70% to 70% : 30%.

4. The method according to claim 1,
wherein the oxidizing agent is selected from the group comprising persulfates, perchlorates, and peroxides.

5. The method according to claim 1 or 4,
wherein the oxidizing agent is present in a concentration of 1% to 20% by weight.

6. The method according to any of the preceding claims,
wherein the solution additionally contains surface-active substances.

7. The method according to any of the preceding claims,
wherein the contact time between the acid solution and the molded part is up to 20 minutes.

8. The method according to any of the preceding claims,
wherein the method is carried out at a temperature in a range of 15°C to 60°.

9. The method according to Claim 8,
wherein the temperature is in a range of 30°C to 40°C.

## Revendications

1. Procédé de polissage chimique par voie humide de pièces moulées en zinc, dans lequel la pièce moulée ou les pièces moulées est ou sont mise(s) en contact avec une solution acide, laquelle solution acide ne contient que de l'acide sulfurique et de l'acide phosphorique en tant qu'acides forts, et la concentration totale en acide des acides forts se situe dans une plage de 40 à 90 % en poids, dans lequel la solution acide ne contient pas d'acide chromique/de chromates, pas d'acide nitrique/de nitrates, pas d'acide fluorhydrique/de fluorures et pas d'acide chlorhydrique/de chlorures, et dans lequel la solution acide contient en outre un agent oxydant.

2. Procédé selon la revendication 1,
dans lequel la pièce moulée ou les pièces moulées est ou sont traitée(s) avec la solution acide jusqu'à ce que la rugosité moyenne Rₐ ait été réduite d'au moins 30 % par rapport à la valeur Rₐ initiale.

3. Procédé selon la revendication 1 ou 2,
dans lequel le rapport (% en poids) de l'acide phosphorique sur l'acide sulfurique dans la solution acide se situe dans une plage de 30 % : 70 % à 70 % : 30 %.

4. Procédé selon la revendication 1,
dans lequel l'agent oxydant est choisi dans le groupe constitué par les persulfates, les perchlorates et les peroxydes.

5. Procédé selon la revendication 1 ou 4,
dans lequel l'agent oxydant est présent dans une concentration de 1 % à 20 % en poids.

6. Procédé selon l'une des revendications précédentes,
dans lequel la solution contient en outre des substances tensioactives.

7. Procédé selon l'une des revendications précédentes,
dans lequel le temps de contact entre la solution acide et la pièce moulée peut aller jusqu'à 20 minutes.

8. Procédé selon l'une des revendications précédentes,
dans lequel le procédé est mis en oeuvre à une température dans une plage de 15 °C à 60 °C.

9. Procédé selon la revendication 8,
dans lequel la température se situe dans une plage de 30 °C à 40 °C.
